# EUROPEAN PATENT SPECIFICATION

(11) **EP 2 018 408 B1**
(45) Date of publication and mention of the grant of the patent: **26.02.2014**
(21) Application number: 07747732.1
(22) Date of filing: 07.05.2007
(51) Int. Cl.: C08J 9/224

(54) **Method of obtaining modified foamable and modified foamed polystyrene**
Verfahren zur herstellung von modifiziertem verschäumbarem und modifiziertem verschäumtem Polystyrol
Procédé d'obtention de polystyrène expansible et expansé modifié

(30) Priority: 09.05.2006 PL 37964406
(43) Date of publication of application: 28.01.2009
(73) Proprietor: Termo Organika Sp. z o.o., 30-117 Kraków (PL)
(72) Inventor: STACHURA, Dariusz, PL-30-241 Kraków (PL); ZADECKI, Wieslaw, PL-41-800 Zabrze (PL); RAMS, Witold, PL-32-602 Oswiecim-Brzezinka (PL)
(74) Representative: Marek, Joanna
(86) International application number: PCT/PL2007/000022
(87) International publication number: WO 2007/129925

(56) References cited:
- AT-B- 316 879
- GB-A- 1 059 777
- GB-A- 1 100 788
- GB-A- 1 360 392
- US-A- 4 264 469
- US-A- 4 485 193
- US-A- 5 861 442
- US-B1- 6 348 512
- DATABASE WPI Week 199111 Derwent Publications Ltd., London, GB; AN 1991-076161 XP002448463 & JP 03 021643 A (ASAHI CHEM IND CO LTD) 30 January 1991 (1991-01-30)

## Description

The present invention relates to a method of obtaining modified foamed polystyrene and modified foamed polystyrene obtained by the method.

Materials of this type are applied, amongst other things, for thermal insulation, as insulation and suppression barriers, acoustic barriers in the construction industry, and land, sea and air transport where thermal resistance and higher mechanical strength achieved without increasing the plastic mass are required.

Polystyrene is amongst the most flammable materials. The oxygen index for this material is approximately 18%, and the heat of combustion approximately 4x10⁸ J/kg. Amongst fire-retardants used for polystyrene materials, of greatest importance are compounds containing bromine, and phosphate and antimonic complexes.

As disclosed in the Polish patent description PL 163320, the method of producing concentrates of the fire-retardants of polystyrene and terpolymer acrylonitrile-butadiene-styrene, is characterized that the compositions of the fire-retardants in the form of a synergic mixture of decabromodiphenyl ether and antimony trioxide, constituting between 20 and 70% of the concentrate mass and the homogenizing agent in the form of brominated aromatic or cycloaliphatic compounds with their melting temperature of below 200°C - are blended in a mixer together with the base material which is polystyrene or terpolymer acrylonitrile-butediene-styrene and the produced mixture is then made, as a result of heating, into a homogenous mass which is further extruded and granulated.

The Polish patent description 185039 discloses a universal concentrate of fire-retardants intended for different types of thermoplastic materials which contains copolymer ethylene-vinyl acetate or its mixture with another polymer of 19-39% by mass, whereas the content of the fire-retardants is between 60 and 80% by mass and the content of modifiers is between 1 and 10% by mass. Thermoplastic material, so modified, is produced through the introduction into the materials of so-called external fire-retardants that is additive antipirens which are not bound with the polymer with chemical bounding.

Another Polish patent application P. 378142 provides knowledge on the method of preparation the materials protecting them against the impact of ultraviolet radiation and ozone, in which a solution of stilbene derivatives are prepared and the derivatives are grafted, at the temperature of up to 55°C in the presence of water-and ozone, in which a solution of stilbene derivatives are prepared and the derivatives are grafted, at the temperature of up to 55°C in the presence of water-with carbonic acid diamide in the quantity of 0.5 to 55 parts by weight in proportion to the mass of the said derivatives and treating directly plastics, cement, concrete, etc. with the modifiers so prepared and/or the active radicals of the said modifiers are built-in the surface of these materials and/or are introduced through monomers or the reacting components during chemical hardening, foaming, polymerization or condensation, etc.

The Polish patent application P.357842 discloses a method of obtaining poorly-combustible foamable polystyrene. This method is applied through bead polymerization in water of styrene monomer or pre-polymer mixed with an initiator and an expanding agent and consists of the production of a mixture of a styrene pre-polymer with the viscosity of 8-30 Pa • s at a temperature of 25°C or a mixture of a solution with the viscosity of 8-30 Pa • s at a temperature of 25°C of polystyrene in styrene with expanded graphite added in the quantity of 7-35 parts by weight per 100 parts by weight of styrene pre-polymer or a solution of polystyrene in styrene, and then a water emulsion of the mixture is produced, the styrene is polymerized and then the polymer beads are separated from the water phase and dried.

The patent description 186332 discloses a method of obtaining foamable styrene polymers containing graphite particles through polymerization of styrene in water suspension in the presence of graphite particles with porophor being introduced before, during or after the polymerization.

Another Polish patent application P. 354969 discloses partial foamable olefin polymers which contain porophor with the boiling temperature of between -5°C to 150°C, selected from amongst alkane, alkanole, ketone, ether or ester or their mixtures. These particles are unfoamed, their bulk density is above 400 g/l, after storing for 1 h at room temperature in the air is foamable as a result of heating to a temperature of above 100°C to bulk density of below 200 g/l. They are produced through saturation of polyolefin granulate with porophor in suspension in a pressure vessel, cooling of the whole material to a temperature of below 100°C, underexpansion and separation of the particles.

Traditional well-known methods for producing foamable materials may cause exposure to chemical substances formed during their foaming. It was found that the porophor. The quantity of the porophor used depends, amongst other things, on the required apparent density (specific gravity).

Pentane, commonly used as an agent foaming styrene polymers, demonstrates the lowest secondary risk resulting from the retention of the gaseous phase while in rheological terms, insulation properties are worsened during the use of the material and the fire risk, especially of endogenous fire, increases.

The main inconvenience and risk in the production of well-known foamed materials is the use of organic porophors whose boiling temperature is low and the generated porophorable gas is a flammable and/or toxic agent thus causing an endogenous or exogeneous fire risk. It is therefore necessary to provide for diffusion exchange of the gaseous phase, after the preliminary foaming - into atmospheric air or inert gas.

Also known is the use of porophors as additions to monomers, e.g. styrene, which, in the cases of the foaming of foamable polystyrene are transformed into the gaseous state. Commonly applied porophors, in addition to water are: pentane, ethers, e.g. petroleum benzine or dimethyl ether, freon, ethyl acetate, acetone, etc., as well as halogenated hydrocarbon derivatives.

Having regard to the real risk of losing the integral structures of foamed polystyrene, there is a need to provide the composition of foamed and foamable materials and a safe method of obtaining materials of this type.

The aim of the invention was to provide new-generation foamed materials, in particular concerning reduction in the anisotropy degree, increased intergranular adhesion during production, improved mechanical and operational properties of such materials through obtaining an additional supporting structure and framework, and regulation as required, of the dispergation and heat resistance.

A major aim of the invention was also to provide a method of obtaining foamed materials which method would considerably reduce the risk of exposure to chemical substances emitted during the process of pyrolysis of these materials.

This aim was achieved through the modification of foamed materials, with such effect being reached through modification of elements such as components, e.g. monomer with expanded polystyrene, while the final effect is defined in the end material which may also be modified during the processes of forming integral structures of expanded polystyrene.

In particular, the objects are achieved by a method of obtaining modified foamed polystyrene according to claim 1, and modified foamed polystyrene according to claim 4. Preferred embodiments are subject of dependent claims.

According to the invention, a method of obtaining modified foamed polystyrene, comprises the following stages: a) mixing of the components with the use of preliminarily foamable polystyrene, the process additions, and the foaming agent in the form of pentane; b) preliminary foaming of polystyrene; c) drying and homogenization of foamed polystyrene in retention vessels; d) forming of expanded polystyrene blocks; and the method is characterised in that after the stage of preliminary foaming of polystyrene, the following are added to the required components: i) di-nitrosopentamethylenetetramine with the formula C₅H₁₀N₄O₂ as endogenous and exogeneous fire inhibitor in the quantity of 0.2-22 parts by weight which is previously homogenized with ii) carbonic acid diamide in the quantity of 0.1-18 parts by weight in the presence of iii) stilbene derivatives in the quantity of 0.05-14 parts by weight and iv) carbonic acid diamide in the quantity of 0.08 - 2.50 parts by weight; v) carboxymethylcellulose sodium as dispersion stabilizer in the quantity of 0.1-8 parts by weight; vi) a water solution of a cationic surface-active agent as dispersing agent in the quantity of 0.5-3.5 parts by weight and vii) a solution of water silicic acid sol in the quantity of 1.2-50 parts by weight; next the entire material is homogenized and dried with the use of compressed air at a temperature of above 12°C for more than 8 minutes, and thereafter the mixture so produced is put into homogenization vessels from which, after a technologically specified time, it is placed in the forming element and mechanically consolidated with the use of process steam, and then the resulting block is put onto the seasoning stand from which, after the lapse of the pre-assumed time, it is subjected to the final operations using the well-known method.

Preferably, according to the invention, the concentration of the dispersing agent is 10% in proportion to the quantity of water.

According to the invention, the preferred stilbene derivative is a 4,4'-bis(s-triazinyl-) diamino-2,2'-disulphostilbene derivative.

Preferably, according to the invention, the concentration of a solution of water silicic acid sol is above 1.8%.

According to the invention the endogenous and exogeneous fires inhibitors are substances which, by effect of heat (temperature) move from the state of aggregation such as liquid or solid into the gaseous phase, containing inert gases such as carbon dioxide and/or nitrogen which, unexpectedly proved to be a burning inhibitor during the emission of the other gases in *statu nascendi* generated during the pyrolysis of expanded polystyrene.

The presence in the materials according to the invention of endogenous and exogeneous fires inhibitors ensures, with thermal decomposition after the moving to the gaseous state, poorly-combustible and/or self-extinguishment, causing, at the same time, the liquidation of the fire caused after the inflammation of the material as a result of the emission of nitrogen and carbon *dioxide in statu nascendi* and the effect of carboxymethylcellulose.

According to the invention, carbonic acid diamide used for the prior modification of endogenous and exogeneous fires inhibitors forms a separation barrier and a barrier conducting excessive electrical friction charges whereas the presence of stilbene derivatives makes it possible to transform ultraviolet radiation into a visible spectrum, neutralizing the excessive energy field.

The product obtained according to the invention are usually elements in the form of boards, characterized by better thermal resistance compared with the standard material, its anisotropy reduced by approximately 50%, and surface (intergranular) adhesion increased by approximately 40%.

It is clear that the high degree of homogenization and neutralization of energy centres is caused by the liquidation of excessive energy media.

However, it was unexpectedly found, that an addition of di-nitrosopentamethylentetramine during the secondary thermal decomposition eliminates the tendency of the polymer medium intended for foaming to undergo exothermic reactions and creation of fire spots and contributes to the liquidation and/or delay in the formation of fire focuses.

The method according to the invention assumes the introduction of an additional modification immediately after the preliminary foaming of polystyrene. During this process operation, the tendency of the emitted porophor (e.g. pentane) to exothermic reactions is limited thus reducing the risk of explosion with ensuring in parallel the penetration of modifiers into the preliminarily foamed polystyrene beads.

The modification of materials according to the invention enables homogeneity of mixtures and dimensional stabilization.

The materials modified according to the invention, polystyrene demonstrate very good thermal insulation properties, dimensional stability, improved mechanical properties, electrostatic neutrality compared with standard polystyrene materials, and high tendency to self-extinguishment and reduced flammability as well as increased surface adhesion when elements are joined by means of glues.

### Example 1

In a vessel equipped with a mixer arm, a water suspension comprising 20 kg water, 1.2 kg carboxymethylcellulose sodium, 1 kg 10% water solution of cationic surface-active agent, 1.2 kg di-nitrosopentamethylenetetramine previously homogenized with 0.1 kg carbonic acid diamine, 0.8 kg water solution of stilbene compounds with the concentration of 30% are added through spraying to 100 kg of preliminarily foamed polystyrene.

After mixing and homogenization with the preliminarily foamed polystyrene and the drying of the whole material, the mixture is put into a process vessel and then, after a specific homogenization time, the entire material is put into a forming element where, after consolidation in the presence of water steam, expanded polystyrene in the form of a block is produced, modified as per invention.

### Example 2

In a vessel equipped with a mixer arm, a water suspension comprising 20 kg water, 1.2 kg carboxymethylcellulose sodium, 1 kg of a 10% water solution of cationic surface-active agent, 1.2 kg di-nitrosopentamethylenetetramine previously homogenized with 0.1 kg carbonic acid diamine, 0.8 kg water solution with the concentration of 30% of stilbene compounds and 10 kg 35% solution of water silicic acid sol with the trade name of Sizol (produced by Zaklady Chemiczne "Rudniki" S.A) are added through spraying to 100 kg of preliminarily foamed polystyrene.

After mixing and homogenization with the preliminarily foamed polystyrene and drying of the entire material, the mixture is put into a process vessel and then, after a specific homogenization time, the whole material is put into a forming element where, in the presence of water steam, expanded polystyrene in the form of a block is produced, modified as per invention.

## Claims

1. A method of obtaining modified foamed polystyrene, comprising the following stages:
a) mixing of the components with the use of preliminarily foamable polystyrene, the process additions, and the foaming agent in the form of pentane;
b) preliminary foaming of polystyrene;
c) drying and homogenization of foamed polystyrene in retention vessels;
d) forming of expanded polystyrene blocks;
**characterised in that** after the stage of preliminary foaming of polystyrene, the following are added to the required components:
i) di-nitrosopentamethylenetetramine with the formula C₅H₁₀N₄O₂ as endogenous and exogeneous fire inhibitor in the quantity of 0.2-22 parts by weight which is previously homogenized with
ii) carbonic acid diamide in the quantity of 0.1-18 parts by weight in the presence of
iii) stilbene derivatives in the quantity of 0.05-14 parts by weight and
iv) carbonic acid diamide in the quantity of 0.08 - 2.50 parts by weight;
v) carboxymethylcellulose sodium as dispersion stabilizer in the quantity of 0.1-8 parts by weight;
vi) a water solution of a cationic surface-active agent as dispersing agent in the quantity of 0.5-3.5 parts by weight and
vii) a solution of water silicic acid sol in the quantity of 1.2-50 parts by weight;
next the entire material is homogenized and dried with the use of compressed air at a temperature of above 12°C for more than 8 minutes, and thereafter the mixture so produced is put into homogenization vessels from which, after a technologically specified time, it is placed in the forming element and mechanically consolidated with the use of process steam, and then the resulting block is put onto the seasoning stand from which, after the lapse of the pre-assumed time, it is subjected to the final operations using the well-known method.

2. The method according to claim 1, **characterised in that** the concentration of the dispersing agent is 10% in proportion to the quantity of water.

3. The method according to claim 1, **characterised in that** the concentration of the solution of water silicic acid sol is more than 1.8%.

4. Modified foamed polystyrene obtained by the method defined in any of claims 1 to 3.

## Patentansprüche

1. Die Methode der Herstellung des modifizierten Polystyrolschaumes, bestehend aus folgenden Etappen:
a) Mischung der Bestandteile unter Anwendung vom voraufgeschäumten Polystyrol, technologischen Adjektiven und Schaumbildner in Form von Pentan,
b) Voraufschäumen des Polystyroles,
c) Trocknung und Homogenisierung des Polystyrolschaumes in Retentionsgefäßen,
d) Formen von Blocks aus expandiertem Polystyrol
die sich dadurch charakterisiert, dass zu den erforderlichen Bestandteilen nach der Etappe der Voraufschäumung des Polystyrols folgende Verbindungen zugefügt werden:
i) Dinitropentamethylentetramin mit der Formel C₅H₁₀N₄O₂, als endogener und exogener Feuerinhibitor in einer Menge von 0,2-22 Massenanteilen, vorher homogenisiert mit...
ii) Kohlensäurediamid in einer Menge von 0,1-18 Massenanteilen in Beisein von...
iii) Stilbenderivate in einer Menge von 0,05-14 Massenanteilen und
iv) Kohlensäurediamid in einer Menge von 0,08 - 2,50 Massenanteilen;
v) Carboxymethylcellulosenatrium als Dispersionsstabilisator in einer Menge von 0,1-8 Massenanteilen;
vi) Wasserlösung eines kationaktiven Tensides als Dispergator in einer Menge von 0,5-3,5 Massenanteilen und
vii) Lösung der Wasserlösung kolloidaler Kieselsäure in einer Menge von 1,2-50 Massenanteilen;
Danach wird das gesamte Material homogenisiert und unter Einsatz von Pressluft in einer Temperatur von über 12°C mindestens 8 Minutenlang getrocknet. Danach kommt das so gebildete Gemisch in Homogenisierungsgefäße, aus den es, nach einem technologisch festgelegten Zeitraum, in ein Formteil zugeführt und unter Einsatz vom Produktionsdampf mechanisch konsolidiert wird. Der so entstandene Block wird auf einem Reifungsgestell aufgestellt, aus dem er nach dem Ablauf der vorher bestimmten Zeit der Endbearbeitung bei Anwendung der gut bekannten Methode unterzogen wird.

2. Methode gemäß Forderung 1, die sich dadurch charakterisiert, dass die Konzentration des Dispergators 10% proportional zur Wassermenge beträgt.

3. Methode gemäß Forderung 1, die sich dadurch charakterisiert, dass die Konzentration der Lösung der Wasserlösung der kolloidalen Kieselsäure über 1,8% beträgt.

4. Der modifizierte Polystyrolschaum, der nach der in der beliebigen Forderung von 1 bis 3 hergestellt ist.

## Revendications

1. Méthode d'obtention de mousse de polystyrène modifiée, comprenant les étapes suivantes :
a) mélange des composants, en utilisant le polystyrène expansé de manière préalable, des additifs technologiques et de l'agent moussant sous forme du pentane,
b) moussage préalable du polystyrène,
c) séchage et homogénéisation de la mousse de polystyrène dans les réservoirs de rétention,
d) formation des blocs du polystyrène expansé,
**caractérisée en ce qu'**après le moussage préalable du polystyrène, les composés suivants sont ajoutés aux composants requis :
i) dinitrosopentaméthylènetétramine de formule C₅H₁₀N₄0₂, en qualité de l'inhibiteur de flamme endogène et exogène, en quantité de 0,2-22 parties en poids, homogénéisée auparavant avec...
ii) diamide de l'acide carbonique, en quantité de 0,1-18 parties en poids, en présence de ...
iii) dérivés de stilbène en quantité de 0,05-14 parties en poids, et
iv) diamide de l'acide carbonique, en quantité de 0,08-2,50 parties en poids;
v) carboxyméthylcellulose sodique comme stabilisateur de dispersion, en quantité de 0,1-8 parties en poids ;
vi) une solution aqueuse de l'agent tensioactif cationique comme agent dispersant en quantité de 0,5-3,5 parties en poids, et
vii) une solution de la solution aqueuse de l'acide silicique colloïdale, en quantité de 1,2-50 parties en poids ;
ensuite, l'ensemble du matériau est homogénéisé et séché à l'aide d'air comprimé à une température supérieure à 12°C pendant plus de 8 minutes, et ensuite le mélange ainsi obtenu est mis dans des récipients d'homogénéisation, sorti desquels, après un temps technologiquement spécifié, il est placé dans l'élément de formage et consolidé mécaniquement à l'aide de la vapeur technologique, et ensuite, le bloc ainsi formé est mis sur le support d'assaisonnement, à partir duquel, après l'écoulement du temps prédéfini, il est soumis aux opérations finales à l'aide de la méthode bien connue.

2. Méthode selon la revendication 1, **caractérisée en ce que** la concentration de l'agent dispersant est de 10% proportionnellement à la quantité de l'eau.

3. Méthode selon la revendication 1, **caractérisée en ce que** la concentration de la solution de la solution aqueuse de l'acide silicique colloïdal est de plus de 1,8%.

4. La mousse de polystyrène modifiée, obtenue par la méthode définie dans une quelconque des revendications 1 à 3.
